**Europäisches Patentamt**

**European Patent Office**

**Office européen des brevets**

(19)

(11) **EP 1 336 868 A1**

(12) **DEMANDE DE BREVET EUROPEEN**

(43) Date de publication:
**20.08.2003 Bulletin 2003/34**

(51) Int Cl.⁷: $G01S\ 13/42$, G01S 13/72

(21) Numéro de dépôt: **02102585.3**

(22) Date de dépôt: **14.11.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **26.11.2001 FR 0115525**

(71) Demandeur: **Thales**
**75008 Paris (FR)**

(72) Inventeurs:
• **BARBARESCO, Frédéric**
**94117 CX, ARCUEIL (FR)**
• **MONNIER, Bernard**
**94117 CX, ARCUEIL (FR)**

(74) Mandataire: **Lucas, Laurent Jacques et al
Thales Intellectual Property,
13, avenue du Président Salvador Allende
94117 Arcueil Cedex (FR)**

(54) **PROCEDE D'ORDONNANCEMENT EN TEMPS REEL NOTAMMENT DES POINTAGES D'UN RADAR**

(57) La présente invention concerne les techniques d'ordonnancement temps réel de tâches.

Selon ce procédé d'ordonnancement de tâches :

- on détermine l'état de charge, cet état étant soit état de surcharge dans lequel toutes les tâches (P1, P2) ne peuvent pas être exécutées, soit un état de sous charge dans lequel toutes les tâches peuvent être exécutées ;
- dans l'état de surcharge, on met en oeuvre une première politique (HPF), dans laquelle les tâches sont ordonnancées en fonction de leurs priorités ;
- dans l'état de sous charge, on met en oeuvre une seconde politique (EDF), dans laquelle les tâches sont ordonnancées en fonction de leurs contraintes temporelles.

L'invention s'applique notamment à l'ordonnancement des pointages d'un radar multifonction à balayage électronique.

Fig. 1

**Description**

La présente invention concerne les techniques d'ordonnancement temps réel de tâches. Elle s'applique notamment à l'ordonnancement des pointages d'un radar multifonction à balayage électronique.

Les radars multifonction à balayage électronique peuvent dépointer leurs faisceaux de façon instantanée dans un cône d'axe perpendiculaire au plan de l'antenne. Ils possèdent différents modes de fonctionnement : antenne tournante, antenne arrêtée, mode mixte, antenne multi-dales, .... Les radars multifonction effectuent plusieurs types de pointages correspondant à différentes missions opérationnelles : la détection (pointages de veille), le pistage de cibles (pointages de poursuite), l'identification, le guidage de missile...

Un radar comprend généralement un générateur de requêtes, qui traduit les missions en pointages. A une mission de veille correspondent des pointages permettant de mailler un espace de veille. A une mission de poursuite correspond un ou plusieurs pointages permettant de suivre une piste. Les pointages des missions de veille et des missions de poursuite sont destinés à être exécutées de manière périodique. Il existe aussi des pointages dont l'exécution est sporadique, notamment les pointages de confirmation (suite à une détection lors d'une veille) et les pointage de ré-acquisition (suite à une non détection lors d'une poursuite). Ces pointages sporadiques peuvent être prioritaires par rapport aux pointages périodiques. L'exécution des pointages, périodiques ou sporadiques, est ordonnancée par un ordonnanceur.

Pour que le fonctionnement de ces radars soit optimal, il faut optimiser l'ordonnancement temporel des pointages. Or l'ordonnancement des pointages est effectué juste avant que ces pointages soient exécutés par le radar. L'ordonnancement des pointages se fait donc en temps réel. A cet effet, on utilise un algorithme rapide, basé sur une politique d'ordonnancement simple. Ceci permet à cet algorithme de fonctionner en un temps restreint, compatible avec les contraintes imposées par l'exécution en temps réel.

Or l'ordonnancement temporel des pointages est un problème d'optimisation multicritère, qui consiste à la fois à maximiser la charge et à exécuter les pointages les plus importants. Etant donné la combinatoire exponentielle de ce problème, il n'existe pas d'algorithme permettant, en un temps restreint, de donner une solution optimale.

Par ses caractéristiques, telles qu'elles seront décrites et revendiquées ci-après, l'invention vise à ordonnancer les pointages en temps réel, et ce en conciliant deux contraintes :

- la première étant de maximiser la charge du radar,
- la seconde étant d'exécuter en priorité les pointages les plus importants.

Pour satisfaire à cet objectif et obtenir d'autres avantages qui ressortiront plus loin, l'invention a pour objet un procédé d'ordonnancement de tâches, caractérisé en ce que :

- on détermine l'état de charge, cet état étant soit état de surcharge dans lequel toutes les tâches ne peuvent pas être exécutées, soit un état de sous charge dans lequel toutes les tâches peuvent être exécutées ;
- dans l'état de surcharge, on met en oeuvre une première politique, dans laquelle les tâches sont ordonnancées en fonction de leurs priorités ;
- dans l'état de sous charge, on met en oeuvre une seconde politique, dans laquelle les tâches sont ordonnancées en fonction de leurs contraintes temporelles.

Selon un mode de mise en oeuvre avantageux, dans la seconde politique, les tâches sont exécutées par ordre de date d'échéance arrivant en premier.

Selon un mode de mise en oeuvre avantageux, dans la seconde politique, les tâches sont exécutées par ordre de date optimale d'exécution la plus proche.

Selon un mode de mise en oeuvre avantageux, dans la première politique, les tâches sont exécutées par ordre de priorité décroissante.

Selon un mode de mise en oeuvre avantageux, dans la première politique :

(a) on ordonnance les tâches d'une liste principale pour construire une trame provisoire, les tâches étant placées dans cette trame ou restant dans la liste principale ;
(b) on vérifie qu'aucune tâche placés dans cette trame n'est en conflit avec une éventuelle tâche destinée à être rejetée ;
(c) si aucune tâche n'est en conflit, on accepte cette trame ;
(d) sinon, on place un ou plusieurs des tâches en conflit de la trame dans une liste secondaire, on place les autres tâches de la trame dans la liste principale, et on réitère l'ordonnancement pour reconstruire cette trame ;
(e) lorsque la trame est acceptée, on place les éventuels tâches de la liste secondaire dans la liste principale, on rejette les éventuelles tâches destinées à être rejetées, et on construit de la même façon la trame suivante à partir des tâches de la liste principale.

Selon un mode de mise en oeuvre avantageux, les tâches à ordonnancer étant les pointages d'un radar, l'espace couvert par le radar étant divisé en secteurs fixes, on détermine l'état de charge du radar dans chacun de ces secteurs fixes.

L'invention sera maintenant décrite de manière plus détaillée dans le cadre d'un exemple particulier de réalisation pratique. Dans le cours de cette description, on fera référence aux figures des dessins annexés, parmi lesquelles :

- la figure 1, un chronogramme, représente deux exemples d'ordonnancement dans un état de surcharge ;
- la figure 2, un chronogramme, représente deux exemples d'ordonnancement dans un état de sous charge ;
- la figure 3, un diagramme azimutal, représente un exemple d'estimation de la charge d'un radar ;
- la figure 4, un chronogramme, représente un pointage à exécutions périodiques ;
- la figure 5, un chronogramme, représente deux exemples d'ordonnancement basés sur des contraintes temporelles.

Une tâche possède des caractéristiques temporelles, notamment :

- une date d'activation,
- une date d'échéance,
- une date d'exécution,
- une durée d'exécution.

La date d'activation est la date à laquelle la tâche peut être exécutée au plus tôt, c'est à dire la date à laquelle la tâche devient éligible.

La date d'échéance est la date à laquelle la tâche doit avoir fini d'être exécutée, c'est à dire la date à laquelle l'exécution de la tâche doit être nécessairement terminée. La date d'échéance est plus tardive que la date d'activation.

La date d'exécution est la date à laquelle débute effectivement l'exécution de la tâche. Cette date d'exécution est définie une fois la tâche ordonnancée. La durée d'exécution de la tâche est l'intervalle de temps entre sa date d'exécution et la fin de son exécution.

Pour qu'une tâche ait le temps de s'exécuter, sa date d'exécution doit être antérieure à sa date d'échéance moins sa durée d'exécution. La date la plus tardive à laquelle la tâche peut être activée est la date d'échéance diminuée de la durée d'exécution. On appelle fenêtre d'activation l'intervalle de temps compris entre la date d'activation et la date la plus tardive à laquelle la tâche peut être activée. La date d'exécution est comprise dans la fenêtre d'activation de la tâche.

Une tâche peut aussi posséder une date optimale d'exécution. La date optimale d'exécution d'une tâche est la date d'exécution de la tâche à laquelle ses performances sont optimales.

Une tâche possède aussi une priorité. La priorité d'une tâche est son degré d'importance. Elle est généralement représentée par un entier positif. On utilise un nombre élevé pour indiquer que l'exécution de cette tâche est importante, et faible dans le cas contraire.

L'invention s'applique aussi bien à l'ordonnancement hors-ligne qu'à l'ordonnancement en-ligne. L'ordonnancement hors-ligne peut être mis en oeuvre lorsqu'on connaît avec certitude les tâches à ordonnancer et leurs paramètres suffisamment tôt. On peut alors construire des trames en appliquant l'invention à la construction de chaque trame. Les trames sont ensuite exécutées. L'ordonnancement en-ligne permet des prendre en compte des événements nouveaux ou imprévus (nouvelles tâches). On ordonnance les tâches en choisissant la prochaine tâche à exécuter. La tâche est alors exécutée dès que possible. L'ordonnancement en-ligne permet d'être plus réactif qu'avec l'ordonnancement hors-ligne.

On décrit l'application de l'invention à la construction de trames d'un radar. Dans cet exemple, les tâches à ordonnancer sont des pointages. Le radar pris en exemple est un radar à balayage électronique, à antenne tournante. Il peut couvrir par exemple un espace de 360° en azimut.

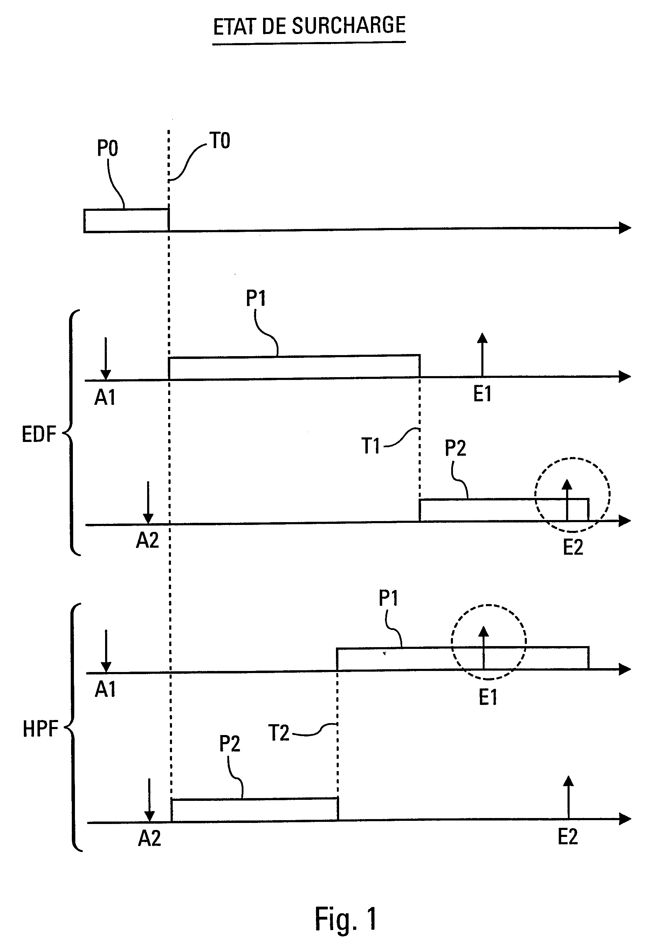

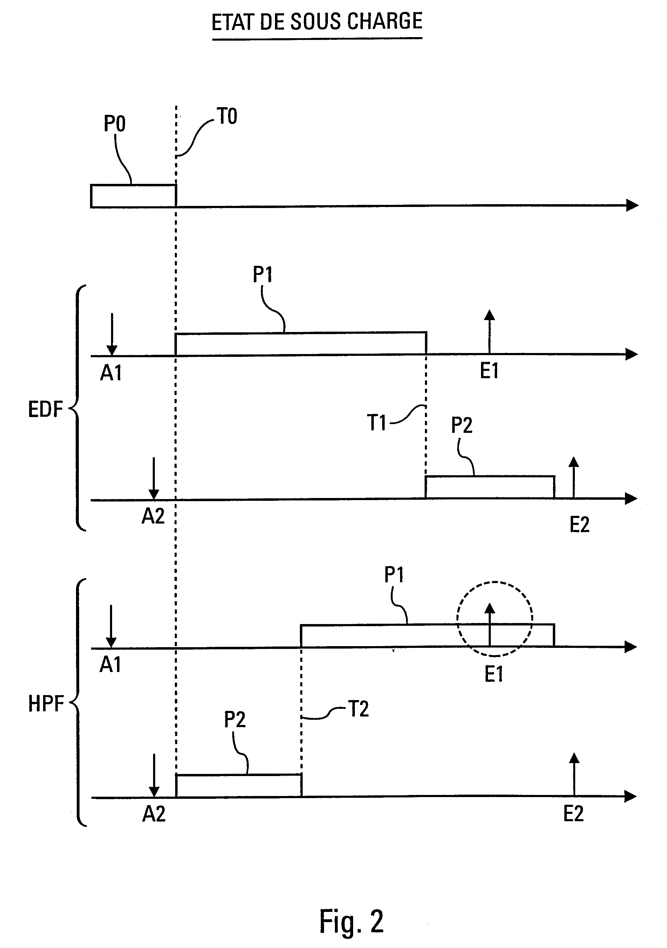

On se réfère maintenant aux figures 1 et 2. Les pointages P0, P1, P2 possèdent une priorité et des contraintes temporelles d'exécution. La priorité d'un pointage peut être par exemple un nombre entier positif.

Les contraintes temporelles d'exécution sont notamment :

- la durée d'exécution du pointage,
- la date A1, A2, à partir de laquelle le pointage doit être exécuté, appelée date d'activation,
- la date E1, E2, avant laquelle le pointage doit être exécuté, appelée date d'échéance du pointage,
- pour les pointages périodiques, la période nominale de rafraîchissement souhaitée.

On peut utiliser une première politique d'ordonnancement, connue sous l'acronyme HPF (issu de l'expression anglo-saxonne « High Priority First »). Cette première politique consiste à exécuter les pointages par ordre de priorité décroissante. Cette politique d'ordonnancement est simple car il suffit de trier les pointages par priorité. La mise en oeuvre de l'ordonnancement est donc rapide. Si des pointages sont rejetés, ceux-ci seront les moins prioritaires. En d'autres termes, la politique HPF permet d'exécuter en priorité les pointages les plus importants.

On peut utiliser une seconde politique d'ordonnancement, connue sous l'acronyme EDF (issu de l'expression anglo-saxonne « Earliest Deadline First »). Cette seconde politique consiste à exécuter les pointages par ordre de date d'échéance arrivant en premier. Cette politique est simple car il suffit de trier les pointages par date d'échéance, et de construire la trame de manière directe en rejetant les pointages dont la date d'échéance est dépassée. On peut montrer que cette politique permet d'ordonnancer tous les pointages si une telle solution existe.

Dans l'exemple illustré sur la figure 1, le radar est dans un état de surcharge. En d'autres termes, tous les pointages ne peuvent pas être exécutés. La date d'échéance E1 du pointage P1 arrive avant la date d'échéance E2 du pointage P2. On suppose que la priorité du pointage P2 est supérieure à celle du pointage P1. On construit une trame à partir du temps T0, en utilisant les deux politiques EDF, HPF.

La politique EDF ne tient pas compte des priorités. Par conséquent le pointage P1 est exécuté avant le pointage P2. L'intervalle de temps entre la date de fin d'exécution T1 du pointage P1 d'une part, et la date d'échéance E2 du pointage P2 d'autre part, est inférieur à la durée du pointage P2. Par conséquent le pointage P2 ne peut pas s'exécuter. En d'autres termes, le pointage P1 s'exécute au détriment du pointage P2.

La politique HPF tient compte des priorités. Par conséquent le pointage P2 est exécuté avant le pointage P1. Ceci empêche l'exécution du pointage P1. Le pointage P2 s'exécute au détriment d'un pointage moins important. Le fonctionnement de l'algorithme d'ordonnancement est nominal.

Dans l'exemple illustré sur la figure 2, le radar est dans un état de sous charge. En d'autres termes, il existe une solution au problème d'ordonnancement qui permet d'exécuter tous les pointages. Par rapport à l'exemple illustré sur la figure 1, on a diminué la durée du pointage P2.

La politique EDF tient compte des contraintes temporelles des pointages, à savoir les dates d'échéance. Le pointage P1 s'exécute, puis le pointage P2 s'exécute à son tour. Tous les pointages ont étés exécutés.

La politique HPF ne tient pas compte des contraintes temporelles des pointages. Le pointage P2 s'exécute en premier. L'intervalle de temps entre la date de fin d'exécution T2 du pointage P2 d'une part, et la date d'échéance E1 du pointage P1 d'autre part, est inférieur à la durée du pointage P1. Par conséquent le pointage P1 ne peut pas s'exécuter. En d'autres termes, le pointage P2 s'exécute au détriment du pointage P1.

Selon un mode de mise en oeuvre de l'invention, on détermine l'état dans lequel se trouve le radar puis on choisit la politique d'ordonnancement en ligne en fonction de la charge. Si le radar est dans un état de surcharge, on met en oeuvre une première politique dans laquelle les pointages sont ordonnancés en fonction de leurs priorités. Cette politique peut être la politique HPF par exemple. Si le radar est dans un état de sous-charge, on met en oeuvre une seconde politique dans laquelle les pointages sont ordonnancés en fonction de leurs contraintes temporelles. Cette politique peut être la politique EDF par exemple.

Avantageusement, afin de déterminer l'état dans lequel se trouve le radar :

- on estime la charge du radar ;
- on compare cette charge estimée à un seuil déterminé.

Pour estimer la charge des pointages périodiques, on peut calculer la quantité suivante :

$$C_t = \sum_i \frac{\tau(i)}{T(i)}$$

où :

- $C_t$ représente la charge instantanée des pointages périodiques à l'instant t ;
- i, l'indice de sommation, représente le numéro d'un pointage périodique dont l'exécution est souhaitée ;
- $\tau(i)$ représente la durée d'exécution du pointage périodique numéro i ;
- $T(i)$ représente la période de rafraîchissement du pointage périodique numéro i.

On peut étendre le calcul de cette quantité aux pointages non périodiques, de manière à estimer la charge instantanée de tous les pointages (périodiques et sporadiques). Les pointages sporadiques peuvent être par exemple :

- des pointages de ré-acquisition, issus des missions de poursuite ; ou,
- des pointages de confirmation, issus des missions de veille.

A cet effet, on ajoute à la durée d'exécution des pointages périodiques, la durée d'exécution des pointages sporadiques susceptibles d'être générés, pondérée par leurs probabilités d'apparition. Par conséquent, la charge instantanée des pointages périodiques et sporadiques peut se calculer de la manière suivante :

$$C'_t = \sum_i \frac{\tau(i) + \alpha(i) \times \tau'(i)}{T(i)}$$

où :

- $C'_t$ représente la charge instantanée des pointages périodiques et sporadiques à l'instant t ;
- i, l'indice de sommation, représente le numéro d'un pointage périodique dont l'exécution est souhaitée ;
- $\tau(i)$ représente la durée d'exécution du pointage périodique numéro i ;
- $T(i)$ représente la période de rafraîchissement du pointage périodique numéro i ;
- $\alpha(i)$ représente la probabilité d'apparition d'un pointage sporadique suite à l'exécution du pointage périodique numéro i ;
- $\tau'(i)$ représente la durée d'exécution du pointage sporadique dont la probabilité d'apparition est α(i).

Pour une poursuite, α(i) est le taux de ré-acquisition. Pour une veille, α(i) est le taux de confirmation. La grandeur α(i) peut être une donnée statistique ou une estimation à partir de la probabilité de détection par exemple.

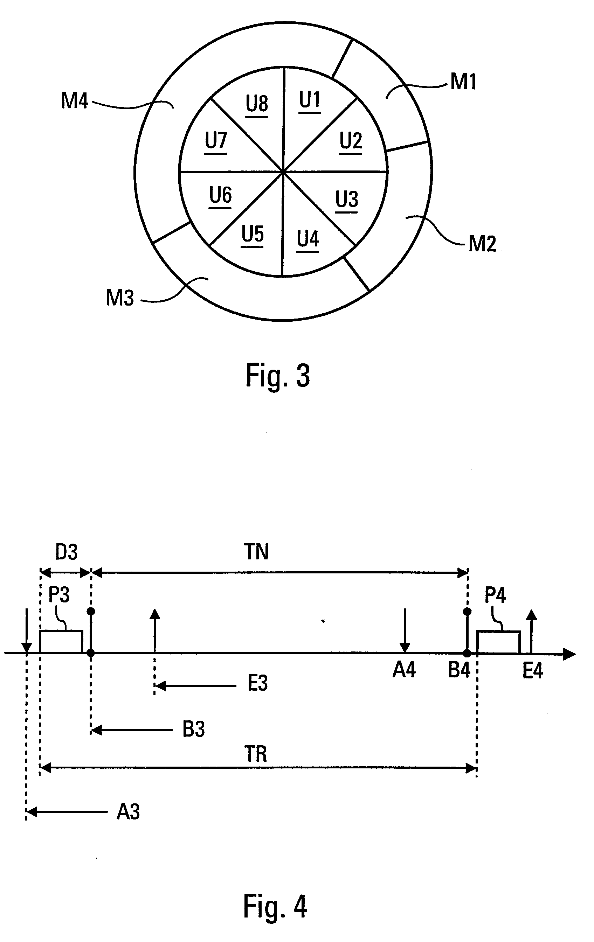

On se réfère maintenant à la figure 3. L'espace couvert par le radar est représenté par un diagramme azimutal, l'antenne du radar étant au centre de ce diagramme. Le centre de commande et de contrôle défini par exemple des missions de veille permettent de veiller sur tout l'espace couvert par le radar. Les missions de veille peuvent par exemple partager l'espace couvert par le radar en secteurs azimutaux M1, M2, M3, M4. L'étendue de ces secteurs azimutaux peut être modifiée en fonction de l'évolution de la répartition des menaces.

Avantageusement, on définit des secteurs fixes U1, U2, ..., U8. Ces secteurs sont indépendants des secteurs azimutaux de veille. Avantageusement, les secteurs fixes U1, U2, ...U8 sont des secteurs azimutaux, ce qui simplifie la mise en oeuvre du procédé selon l'invention. Avantageusement, les secteurs fixes ont la même dimension.

On estime l'état dans lequel se trouve le radar dans chacun des secteurs fixes U1, U2, ..., U8. Dans cet exemple, la mission de veille couvrant le secteur M1 induit une charge dans les secteurs fixes U1 et U2. La mission de veille couvrant le secteur M4 induit une charge dans les secteurs fixes U1, U8, U7, U6. Par conséquent, le secteur fixe U1 comprend une partie du secteur M1 et une partie du secteur M4. La charge du radar dans le secteur fixe U1 est donc une moyenne des charges induites par deux missions de veille différentes. Le radar peut être dans un état de surcharge dans le secteur U2, mais en sous charge dans le secteur U1 par exemple. La division de l'espace couvert par le radar en secteurs indépendants des missions du radar, permet de rendre compte de ce phénomène de répartition de charges entre les missions. Le fait que ces secteurs soient fixes accélère les traitements car il n'est pas nécessaire de redéfinir les limites des secteurs fixes pendant les traitements en temps réel.

On se réfère maintenant à la figure 4. Un pointage à exécutions périodiques y est représenté. On a représenté deux occurrences P3 et P4 de cette exécution. La première occurrence P3 est exécutée entre une date d'activation A3 et une date d'échéance E3. On associe à cette occurrence une date optimale d'exécution B3. Cette date optimale B3 est la date à laquelle l'exécution de cette occurrence doit débuter pour avoir les meilleures performances. Cette date peut être par exemple la date à laquelle la position de l'antenne est orthogonale à la direction du pointage. De la même façon, on associe à l'occurrence P4 une date d'activation A4, une date optimale d'exécution B4 et une date d'échéance E4.

On appelle période réelle, le temps séparant deux dates d'exécutions successives d'un pointage. Cette période réelle est variable. Par exemple, la période réelle TR correspondant aux occurrences P3 et P4 est égale au laps de temps écoulé entre la date d'exécution de l'occurrence P3, et la date d'exécution de l'occurrence P4.

On appelle période nominale, le temps souhaité entre deux dates d'exécution successives. La période nominale est constante. Par exemple, la période nominale TN du pointage illustré sur la figure 4 est égale au laps de temps écoulé entre deux dates optimales d'exécution successives B3 et B4.

La période réelle TR est différente de la période nominale TN dans cet exemple. Ceci provient du décalage entre les dates d'exécutions des effectives occurrences d'une part, et les dates optimales d'exécution d'autre part. Ainsi, l'occurrence P3 est exécutée en avance d'une durée D3 par rapport à sa date optimale d'exécution B3.

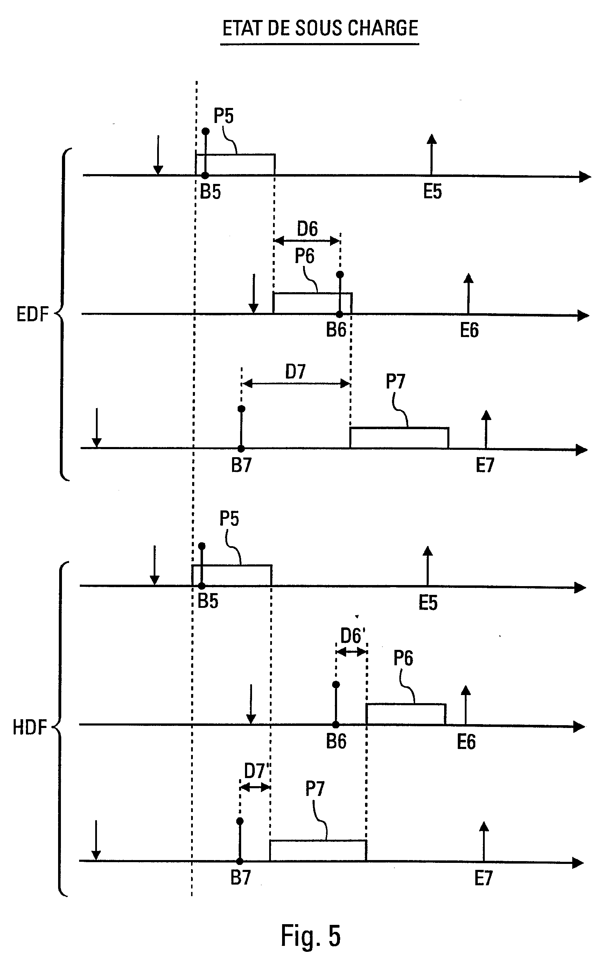

On se réfère maintenant à la figure 5 sur laquelle est illustrée une variante avantageuse de mise en oeuvre du procédé selon l'invention. Lorsque le radar est dans un état de sous charge, la seconde politique peut consister à exécuter les pointages par ordre de date optimale d'exécution la plus proche. On désigne cette politique par l'acronyme HDF, ayant pour origine l'expression anglo-saxonne « High delay from Due time First ». En d'autres termes, dans un état de sous charge, on met en oeuvre préférentiellement la politique HDF plutôt que la politique EDF.

Dans l'exemple illustré sur la figure 5, le radar est dans un état de sous charge. Des pointages P5, P6, P7 ont des dates d'échéances E5, E6, E7 en allant de la date la plus proche à la date la plus lointaine. En mettant en oeuvre la politique EDF, on ordonnance donc P5, puis P6, puis P7. Cependant les dates optimales d'exécution de ces pointages sont B5, B7, B6 en allant de la date la plus proche à la date la plus lointaine. En mettant en oeuvre la politique HDF, on ordonnance donc P5, puis P7, puis P6.

La mise en oeuvre de la politique EDF conduit à des déflexions D6, D7 supérieures globalement à celle obtenues D6', D7' par la mise en oeuvre de la politique HDF.

Pour les radars à antenne tournante, la politique EDF a tendance à favoriser un ordonnancement des pointages en front avant du cône de visibilité. En d'autres termes, les pointages sont exécutés le plus tôt possible (juste après leur date d'activation). Ceci a pour conséquence d'augmenter la déflexion moyenne globale des pointages exécutés. Ce fonctionnement n'est pas optimal car les pointages sont moins performants lorsqu'ils sont exécutés trop tôt. En utilisant la politique HDF, on cherche à exécuter les pointages à leur date optimale d'exécution, c'est à dire par exemple lorsque l'axe de visée est perpendiculaire au plan de l'antenne. En d'autres termes, on met en oeuvre préférentiellement la politique HDF, ce qui permet de réduire la déflexion moyenne globale des pointages exécutés.

La politique HDF présente aussi un intérêt pour les radars à antennes fixe, notamment celui d'avoir des périodes réelles TR plus proches des périodes nominales TN.

Selon un autre mode de mise en oeuvre avantageux, la première politique d'ordonnancement consiste à appliquer une politique d'ordonnancement pour construire une trame provisoire, puis à retirer provisoirement les éventuels pointages en conflit de priorité. La politique d'ordonnancement utilisée pour construire les trames provisoire peut être une politique dans laquelle les tâches sont ordonnancées en fonction de leurs contraintes temporelles par exemple.

On considère qu'il existe un conflit entre un premier pointage et un second pointage lorsque :

- le premier pointage a une priorité supérieure au second pointage ;
- le premier pointage est destiné à être rejeté ;
- le second pointage est placé dans la trame ;
- les chances de placer le premier pointage dans la trame augmentent de manière non négligeable si on enlève provisoirement (pendant la durée de construction de la trame) le second pointage de la liste principale.

Deux pointages ne sont pas en conflit par exemple si la date d'échéance du premier précède la date d'exécution du second. En effet, la construction d'une trame est déterministe. Par conséquent, le fait d'enlever provisoirement le second pointage ne modifie pas la construction de la trame avant ce pointage. Or le premier pointage ne peut être placé dans la trame qu'avant la date d'exécution du second. Les chances de placer le premier pointage dans la trame sont donc nulles même si on enlève provisoirement le second pointage de la liste principale.

Ainsi,

(a) on ordonnance les tâches d'une liste principale pour construire une trame provisoire, les tâches étant placées dans cette trame ou restant dans la liste principale ;

(b) on vérifie qu'aucune tâche placés dans cette trame n'est en conflit avec une éventuelle tâche destinée à être rejetée ;

(c) si aucune tâche n'est en conflit, on accepte cette trame ;

(d) sinon, on place un ou plusieurs des tâches en conflit de la trame dans une liste secondaire, on place les autres tâches de la trame dans la liste principale, et on réitère l'ordonnancement pour reconstruire cette trame ;

(e) lorsque la trame est acceptée, on place les éventuels tâches de la liste secondaire dans la liste principale, on rejette les éventuelles tâches destinées à être rejetées, et on construit de la même façon la trame suivante à partir des tâches de la liste principale.

Bien entendu, l'invention s'applique à tout type de radar. Elle s'applique aussi aux radars à antenne fixe. Bien entendu, l'invention s'applique à d'autres domaines dans lesquels des tâches doivent être ordonnancées.

Elle s'applique notamment aux satellites d'observation. On peut ainsi ordonnancer les prises de vue qu'un satellite d'observation (tel que SPOT) doit effectuer de la terre par exemple. Dans cette application, chaque prise de vue est une tâche. La fenêtre d'activation de ces tâches dépend de la position relative du satellite et de la zone à photographier (déflexion maximale possible), des conditions météo (visibilité),... Les priorités des tâches sont dépendent par exemple du type de client (les prises de vue des clients militaires sont plus prioritaires que celles des clients civils par exemple). Une trame peut être construite à chaque fois que le satellite passe du côté obscur de la terre, et exécutée du côté ensoleillé.

L'invention s'applique plus généralement à tout dispositif de prise de vue. A titre d'exemple, l'invention s'applique à l'ordonnancement des prises de vue d'un équipement optronique embarqué dans un avion. Les tâches dans cet exemple sont les prises de vues effectuées par l'équipement optronique. Ces prises de vues peuvent avoir d'autres caractéristiques (champ de la prise de vue : grand champ ou petit champ) qui influent sur le choix de la politique d'ordonnancement (on cherche à limiter le nombre de commutations grand champ / petit champ par exemple).

## Revendications

1. Procédé d'ordonnancement de tâches, **caractérisé en ce que** :

   - on détermine l'état de charge, cet état étant soit état de surcharge dans lequel toutes les tâches (P1, P2) ne peuvent pas être exécutées, soit un état de sous charge dans lequel toutes les tâches peuvent être exécutées ;
   - dans l'état de surcharge, on met en oeuvre une première politique (HPF), dans laquelle les tâches sont ordonnancées en fonction de leurs priorités ;
   - dans l'état de sous charge, on met en oeuvre une seconde politique (EDF), dans laquelle les tâches sont ordonnancées en fonction de leurs contraintes temporelles.

2. Procédé d'ordonnancement selon la revendication 1, **caractérisé en ce que** dans la seconde politique, les tâches sont exécutées par ordre de date d'échéance arrivant en premier (EDF).

**3.** Procédé d'ordonnancement selon la revendication 1, **caractérisé en ce que** dans la seconde politique, les tâches sont exécutées par ordre de date optimale d'exécution la plus proche (HDF).

**4.** Procédé d'ordonnancement selon l'une quelconque des revendications précédentes, **caractérisé en ce que** dans la première politique, les tâches sont exécutées par ordre de priorité décroissante (HPF).

**5.** Procédé d'ordonnancement selon l'une quelconque des revendications 1 à 3, **caractérisé en ce que** dans la première politique :

> (a) on ordonnance les tâches d'une liste principale pour construire une trame provisoire, les tâches étant placées dans cette trame ou restant dans la liste principale ;
> (b) on vérifie qu'aucune tâche placés dans cette trame n'est en conflit avec une éventuelle tâche destinée à être rejetée ;
> (c) si aucune tâche n'est en conflit, on accepte cette trame ;
> (d) sinon, on place un ou plusieurs des tâches en conflit de la trame dans une liste secondaire, on place les autres tâches de la trame dans la liste principale, et on réitère l'ordonnancement pour reconstruire cette trame ;
> (e) lorsque la trame est acceptée, on place les éventuels tâches de la liste secondaire dans la liste principale, on rejette les éventuelles tâches destinées à être rejetées, et on construit de la même façon la trame suivante à partir des tâches de la liste principale.

**6.** Procédé d'ordonnancement selon l'une quelconque des revendications précédentes, **caractérisé en ce que** les tâches à ordonnancer étant les pointages d'un radar, l'espace couvert par le radar étant divisé en secteurs fixes (U1, U2, ..., U8), on détermine l'état de charge du radar dans chacun de ces secteurs fixes.

ETAT DE SURCHARGE

Fig. 1

## ETAT DE SOUS CHARGE

**Fig. 2**

M4 M1

U8 U1

U7 U2

U6 U3

U5 U4

M3 M2

## Fig. 3

D3 TN

P3

P4

A4 B4 E4

E3

B3

TR

A3

## Fig. 4

## ETAT DE SOUS CHARGE

Fig. 5

**Office européen des brevets**

**RAPPORT DE RECHERCHE EUROPEENNE**

Numéro de la demande

EP 02 10 2585

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 649 390 A (ANDREWS LAVERN A ET AL) 10 mars 1987 (1987-03-10) * abrégé * * colonne 8, ligne 11 - colonne 29, ligne 58; figures 1-11 * | 1-6 | G01S13/42 G01S13/72 |
| A | FR 2 723 211 A (DASSAULT ELECTRONIQUE) 2 février 1996 (1996-02-02) * abrégé * * page 6, ligne 24 - page 19, ligne 5; figures 1-3 * | 1,2,4,6 | |
| A | FR 2 737 578 A (DASSAULT ELECTRONIQUE) 7 février 1997 (1997-02-07) * abrégé * * page 4, ligne 34 - page 21, ligne 22; figures 1-6 * | 1,3,5 | |
| A | US 5 748 468 A (NOTENBOOM LEO A ET AL) 5 mai 1998 (1998-05-05) * abrégé * * colonne 4, ligne 30 - colonne 15, ligne 57; figures 1-6 * | 1-5 | |
| A | PATENT ABSTRACTS OF JAPAN vol. 2000, no. 04, 31 août 2000 (2000-08-31) & JP 2000 003286 A (NEC MOBILE COMMUN LTD), 7 janvier 2000 (2000-01-07) * abrégé * | 1 | |
| A | PATENT ABSTRACTS OF JAPAN vol. 1995, no. 10, 30 novembre 1995 (1995-11-30) & JP 07 177197 A (NEC CORP), 14 juillet 1995 (1995-07-14) * abrégé * | 1 | |

**DOMAINES TECHNIQUES RECHERCHES (Int.Cl.7)**

G01S

-/--

Le présent rapport a été établi pour toutes les revendications

| Lieu de la recherche | Date d'achèvement de la recherche | Examinateur |
|---|---|---|
| LA HAYE | 26 juin 2003 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

12

**Office européen
des brevets**

## RAPPORT DE RECHERCHE EUROPEENNE

*Numéro de la demande*

EP 02 10 2585

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PHAM K K: "Location accuracy in X-band multifunction radar" PROCEEDINGS OF THE NATIONAL RADAR CONFERENCE. LOS ANGELES, MAR. 12 - 13, 1991, NEW YORK, IEEE, US, vol. CONF. 5, 12 mars 1991 (1991-03-12), pages 6-10, XP010038682 ISBN: 0-87942-629-2 ----- | | |

| DOMAINES TECHNIQUES RECHERCHES (Int.Cl.7) |
|---|
| |

Le présent rapport a été établi pour toutes les revendications

| Lieu de la recherche | Date d'achèvement de la recherche | Examinateur |
|---|---|---|
| LA HAYE | 26 juin 2003 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 02 10 2585

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-06-2003

| Document brevet cité au rapport de recherche | | Date de publication | Membre(s) de la famille de brevet(s) | | Date de publication |
|---|---|---|---|---|---|
| US 4649390 | A | 10-03-1987 | AU | 570732 B2 | 24-03-1988 |
| | | | AU | 3396584 A | 12-03-1985 |
| | | | CA | 1243758 A1 | 25-10-1988 |
| | | | DE | 3478511 D1 | 06-07-1989 |
| | | | DK | 142185 A | 29-03-1985 |
| | | | EP | 0151640 A1 | 21-08-1985 |
| | | | GR | 80033 A1 | 12-12-1984 |
| | | | IL | 72646 A | 31-12-1987 |
| | | | JP | 60501974 T | 14-11-1985 |
| | | | NO | 851372 A ,B, | 02-04-1985 |
| | | | WO | 8500896 A1 | 28-02-1985 |
| FR 2723211 | A | 02-02-1996 | GB | 2301503 A ,B | 04-12-1996 |
| | | | FR | 2723211 A1 | 02-02-1996 |
| FR 2737578 | A | 07-02-1997 | FR | 2737578 A1 | 07-02-1997 |
| | | | GB | 2318237 A ,B | 15-04-1998 |
| US 5748468 | A | 05-05-1998 | AUCUN | | |
| JP 2000003286 | A | 07-01-2000 | AUCUN | | |
| JP 07177197 6 | A | | AUCUN | | |

EPO FORM P0460

Pour tout renseignement concernant cette annexe : voir Journal Officiel de l'Office européen des brevets, No.12/82